# EUROPEAN PATENT APPLICATION

(11) **EP 2 963 604 A1**
(43) Date of publication of application: **06.01.2016**
(21) Application number: 14306056.4
(22) Date of filing: 30.06.2014
(51) Int. Cl.: G06Q 30/02, G07F 11/00

(54) **Method for recommending at least one item from a vending machine to a user**

(71) Applicant: Orange, 75015 Paris (FR)
(72) Inventor: Zemek, Radim, Higashimurayama-shi, Tokyo 1890013 (JP); Nakano, Asako, Shinjuku-ku, Tokyo 160-0022 (JP)

(57) **Abstract**

The invention relates to a method for recommending at least one item from a vending machine to a user, the vending machine being connected to at least a recommendation server through a communication network, the method comprising the following steps of :
- Receiving a first message comprising an identifier of the vending machine and an identifier of a user of the vending machine,
- Receiving, in answer to a first request comprising the identifier of the user, a second message from a first sever storing parameters related to users of the vending machine, said second message comprising at least one parameter related to an electronic device of the user,
- Receiving, in answer to a second request comprising the identifier of the vending machine, a third message from a second server storing parameters related to vending machines, the third message comprising at least one parameter related to the items currently available in the vending machine,
- Based on the first and second parameters, determining a set of at least one item currently available in the vending machine to be recommended to the user,
- Transmitting a fourth message to the vending machine comprising an identifier of the items of the set of items currently available in the vending machine to be recommended to the user.

## Description

The present invention generally relates to a method for recommending items to a user and more particularly to a user of a vending machine.

Smart vending machines, with the ability to recognize and recommend items to customer age and sex, are currently being deployed in transit hubs such as train stations, subway stations, etc.

These vending machines enable an increasing of the sales among general customers through better targeted advertising. Rather than using a traditional pushbutton system, the vending machines use a touch panel display, so that only images of the available items are displayed. Customers can also zoom in on a particular item to get more detailed product information if desired.

When a customer nears a vending machine, the sensors embedded in the vending machine recognize the age and the sex of the customer with a 75% accuracy, and make recommendations based on this information.

When people are not in its near vicinity, the vending machine switches to an advertising mode that displays imagery based on factors such as season, time of day, and temperature.

Such vending machines are controlled through a centralized server, allowing a monitoring by the vending company managing the vending machines.

Although such vending machines recommend items to the customers, they are not personalized because each customer is not uniquely identified by the vending machine.

It is an objective of the present invention to overcome disadvantages and/or make improvements in the prior art.

In that respect, the present invention relates to a method for recommending at least one item from a vending machine to a user, the vending machine being connected to at least a recommendation server through a communication network, the method comprising the following steps of :
- Receiving a first message comprising an identifier of the vending machine and an identifier of a user of the vending machine,
- Receiving, in answer to a first request comprising the identifier of the user, a second message from a first sever storing parameters related to users of the vending machine, said second message comprising at least one parameter related to an electronic device of the user,
- Receiving, in answer to a second request comprising the identifier of the vending machine, a third message from a second server storing parameters related to vending machines, the third message comprising at least one parameter related to the items currently available in the vending machine,
- Based on the first and second parameters, determining a set of at least one item currently available in the vending machine to be recommended to the user,
- Transmitting a fourth message to the vending machine comprising an identifier of the items of the set of items currently available in the vending machine to be recommended to the user.

Such a method provides each user a more relevant and meaningful recommendation since the user is uniquely identified.

The recommendation provided to a user is based on an identifier of the user. Such an identifier enables to access information, stored in the first server, representing, in particular, a history of the user recommendations and purchases. The first server may also store information related to one or more user equipments belonging to the user. The configuration of these user equipments may be used in order to recommend items to the user.

Since only currently available items can be recommended to a user, he is sure he can get this particular item, it not needed to connect to another vending machine for him to get this item.

According to a feature of the method of the invention, the method further comprises the steps of :
- Detecting a selecting command input triggering the selection of at least one item currently available in the vending machine,
- Delivering the selected item to the user,
- Transmitting a fifth message to the second server comprising an identifier of the delivered item.

Thus the second server is updated. The recommendation server will receive up to date information related to the currently available items, providing the user with accurate recommendations.

According to a feature of the method according to the invention, the second server transmits a sixth message to the user equipment of the user, the sixth message comprising at least one parameter related to a retrieving of the delivered item.

In case the recommended item delivered to the user is rented, the user is provided information about the duration of the rental and a list of the places where the item can be retrieved.

Another object of the invention is a recommendation server capable of recommending at least one item from a vending machine to a user, the vending machine being connected to the recommendation server through a communication network, the recommendation server comprising :
- A receiver for receiving a first message comprising an identifier of the vending machine and an identifier of a user of the vending machine,
- A receiver for receiving, in answer to a first request comprising the identifier of the user, a second message from a first sever storing parameters related to users of the vending machine, said second message comprising at least one parameter related to an electronic device of the user,
- A receiver for receiving, in answer to a second request comprising the identifier of the vending machine, a third message from a second server storing parameters related to vending machines, the third message comprising at least one parameter related to the items currently available in the vending machine,
- Based on the first and second parameters, a module for determining a set of at least one item currently available in the vending machine to be recommended to the user,
- A transmitter for transmitting a fourth message to the vending machine comprising an identifier of the items of the set of items currently available in the vending machine to be recommended to the user.

Another object of the invention is a system comprising a vending machine connected to a recommendation server through a communication network, a first sever storing parameters related to users of the vending machine, a second server storing parameters related to vending machines and a user equipment of the user, the recommendation server :
- Receiving a first message comprising an identifier of the vending machine and an identifier of a user of the vending machine,
- Receiving, in answer to a first request comprising the identifier of the user, a second message from a first sever storing parameters related to users of the vending machine, said second message comprising at least one parameter related to an electronic device of the user,
- Receiving, in answer to a second request comprising the identifier of the vending machine, a third message from a second server storing parameters related to vending machines, the third message comprising at least one parameter related to the items currently available in the vending machine,
- Based on the first and second parameters, determining a set of at least one item currently available in the vending machine to be recommended to the user,
- Transmitting a fourth message to the vending machine comprising an identifier of the items of the set of items currently available in the vending machine to be recommended to the user,
- Detecting a selecting command input triggering the selection of at least one item currently available in the vending machine,
- Delivering the selected item to the user,
- Transmitting a fifth message to the second server comprising an identifier of the delivered item.

Finally, one object of the invention concerns computer programs, in particular computer programs on or in an information medium or memory, suitable for implementing the methods object of the invention. These programs can use any programming language, and be in the form of source code, binary code, or of code intermediate between source code and object code such as in a partially compiled form, or in any other desirable form for implementing the communication methods according to the invention.

The information medium may be any entity or device capable of storing the programs. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present invention is explained in further detail, and by way of example, with reference to the accompanying drawings wherein :
FIG. 1 represents a vending machine according to an embodiment of the invention,
FIG. 2 represents a system in which the method for recommending an item according to the invention is executed,
FIG. 3 represents the steps of the method for recommending items according to the invention,
FIG. 4 represents a recommendation server 20 according to the invention.

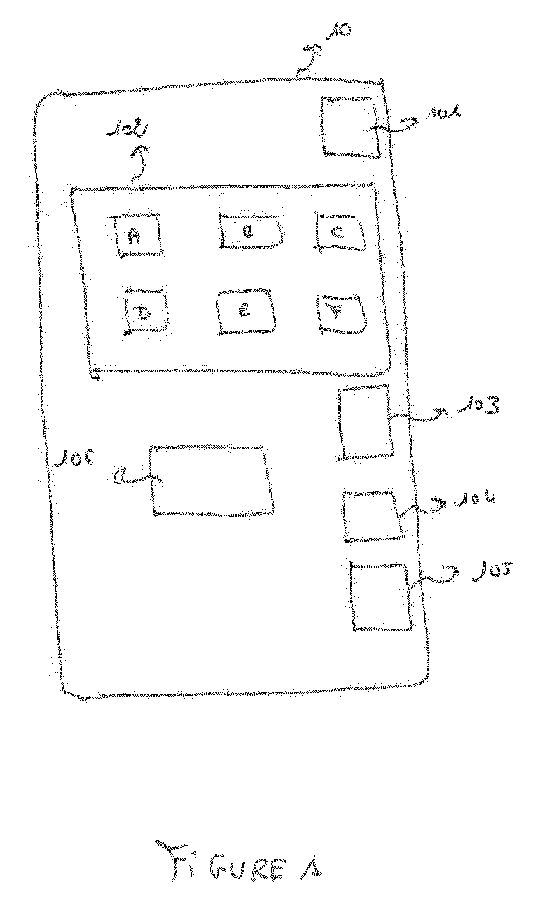

**Figure 1** represents a vending machine 10 according to an embodiment of the invention.

The vending machine 10 comprises a module 101 for connecting to a communication network, such as an Ethernet plug or an optical plug for connecting an optical fiber.

The vending machine 10 comprises a panel display 102, so that the available items A-F are displayed. The panel display 102 may be a touch panel display, in which case, only images of the available items A-F are displayed. The panel display 102 may be a transparent touch panel display, in which case the user may see the available items A-F.

The vending machine 10 comprises an identification module 103 for identifying the user. Such an identification module 103 is for example a keypad on which a user can enter a combination of a login and password in order to identify himself. In another embodiment of the invention, the identification module 103 may be a module capable of face recognition. In another embodiment of the invention, the identification module 103 may be a NFC tag reader or a QR code reader.

A user of the vending machine 10 must be uniquely identified but may have multiple identifiers. These different identifiers are linked to a given user equipment of the user. For example, a user may possess a smartphone and a tablet, in this case, the user has two identifiers one associated to his smartphone and the other associated with his tablet.

It does not matter if the user identifies himself with his smartphone or his tablet, he will be uniquely identified.

The vending machine 10 comprises an identification module 104 for identifying the vending machine. In an embodiment of the invention, the identification module 104 may be a NFC tag reader or a QR code reader.

The vending machine 10 comprises a payment module 105. Such a payment module 105 may be a NFC tag reader, a credit card reader, etc.

The vending machine 10 comprises a slot 106 for retrieving the delivered item.

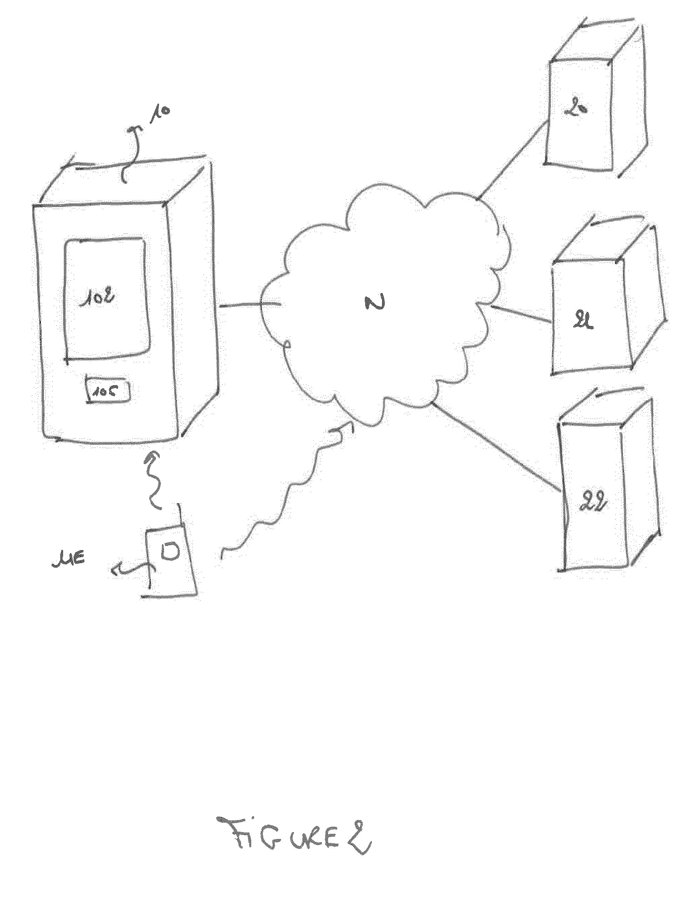

**Figure 2** represents a system in which the method for recommending an item according to the invention is executed.

The vending machine 10 is connected, for example, by means of an Ethernet cable to a communication network N, such as Internet.

A first server 20, called recommendation server 20 is connected to the network N. The recommendations server 20 is managed for example by a telecommunication operator.

A second server 21 storing parameters related to users of the vending machine and called user profile server 21, is connected to the network. The user profile server 21 is managed for example by a telecommunication operator. The user profile server 21 comprises information related to users of the vending machine 10 such as : the user's name, a name and a configuration of at least one user equipment UE of the user used for identification, past purchases in vending machines 10, whether the user is in roaming, based on a history of the connections of one of his user equipment to a communication network, next most likely user's location based on a trajectory of at least one of his user equipment UE, etc.

A third server 22 storing parameters related to vending machines and called management server 22, is connected to the network N. the management server 22 is managed by an operator managing vending machines 10.

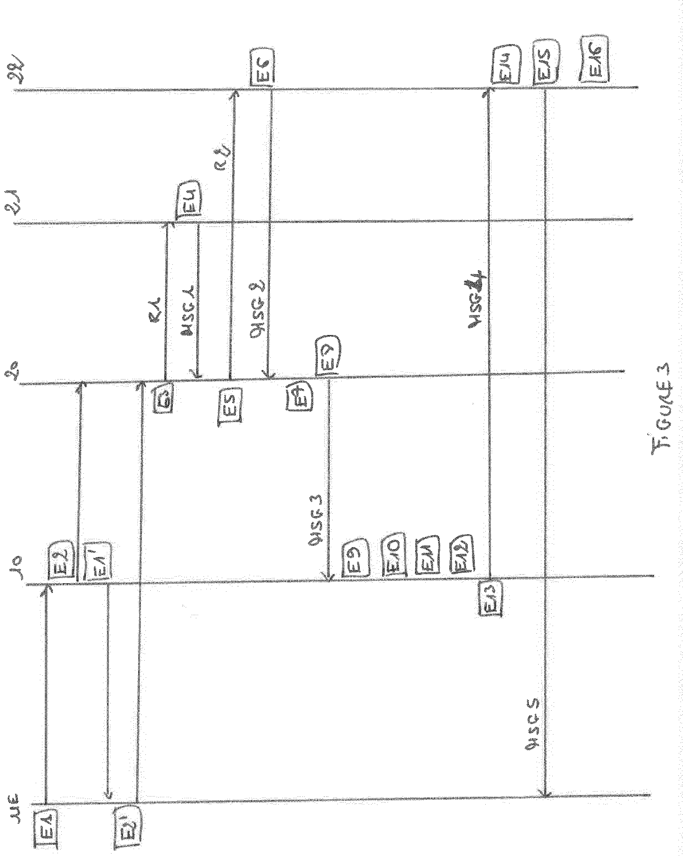

**Figure 3** represents the steps of the method for recommending items according to the invention.

In a step E1, the vending machine 10 receives a first message comprising an identifier an identifier of a user of the vending machine 10 sent by a user equipment UE of the user.

In a step E2, the vending machine 10 transmits the identifier of the user and an identifier of the vending machine 10 to the recommendation server 20.

In another embodiment of the method of the invention, in a step E1', the user equipment UE detects an identifier of the vending machine 10, such as a QR code.

In a step E2', the user equipment sends the identifier of the vending machine 10 and an identifier of the user to the recommendation server 20.

In a step E3, the recommendation server 20 sends a first request R1 comprising the identifier of the user to the user profile server 21.

In a step E4, the user profile server 21 sends a message MSG1 to the recommendation server 20 comprising at least one parameter related to the user, such as the user's name, a name and a configuration of at least one user equipment UE of the user used for identification, past purchases in vending machines 10, whether the user is in roaming, based on a history of the connections of one of his user equipment to a communication network, next most likely user's location based on a trajectory of at least one of his user equipment UE, etc.

In another embodiment of the method of the invention, the user profile server 21 can directly query the user equipment UE to receive information about the status of the user equipment such as, e.g. remaining battery energy.

Thus the user profile server 21 can provide status of the user equipment UE to the recommendation server 20, so that the recommendation server 20 can recommend product based on the status of the user equipment UE, e.g. recommending battery power pack if one of the user equipment UE is running out of energy.

In a step E5, the recommendation server 20 sends a second request R2 to the management server 22, the request R2 comprising the identifier of the vending machine 10.

In a step E6, the management server 22 sends a second message MSG2 to the vending machine 22, the message MSG2 comprising at least one parameter related to the items A-F currently available in the vending machine 10.

Based on the parameter related to the user and the parameter related to the items A-F currently available in the vending machine 10, the recommendation server 20 determines, during a step E7, a set of items currently available in the vending machine 10, to be recommended to the user. The determined set comprises for example the items A, C, D and F. The set of recommended items is determined by means of recommendation algorithms executed by the recommendation server 20.

In a step E8, the recommendation server 20 transmits a third message MSG3 to the vending machine 10. The message MSG3 comprises an identifier of the items A, C, D and F constituting the set of recommended items currently available in the vending machine 10.

In a step E9, the vending machine 10 displays the recommended items A, C, D and F on its panel display 102 so the user can select one of these items and purchase or rent it.

In a step E10, the vending machine 10 detects a selecting command input triggering the selection of at least one of the recommended items A, C, D or F currently available in the vending machine 10.

In a step E11, the vending machine 10 detects a payment command input on the payment module 105 indicating the user paid for the selected item.

In a step E12, the vending machine 10 delivers the selected item to the user, through the slot 106.

In a step E13, the vending machine 10 transmits a fourth message MSG4 to the management server 22 comprising an identifier of the item selected and purchased by the user. Upon reception of this message mSG4, the management server 22 updates its database in regard of the items currently available in the vending machine 10 in a step E14.

In a step E15, the management server 22 transmits a fifth message MSG5 to the user equipment UE of the user. The message MSG5 comprises, when the item is purchased by the user, billing information and when the item is rented by the user, at least one parameter related to a retrieving of the delivered item such as information about the duration of the rental and a list of the places where the item can be retrieved.

When the user retrieves the rented item, and the rented item is available, again, in the vending machine 10, the management server 22 is updated in a step E16.

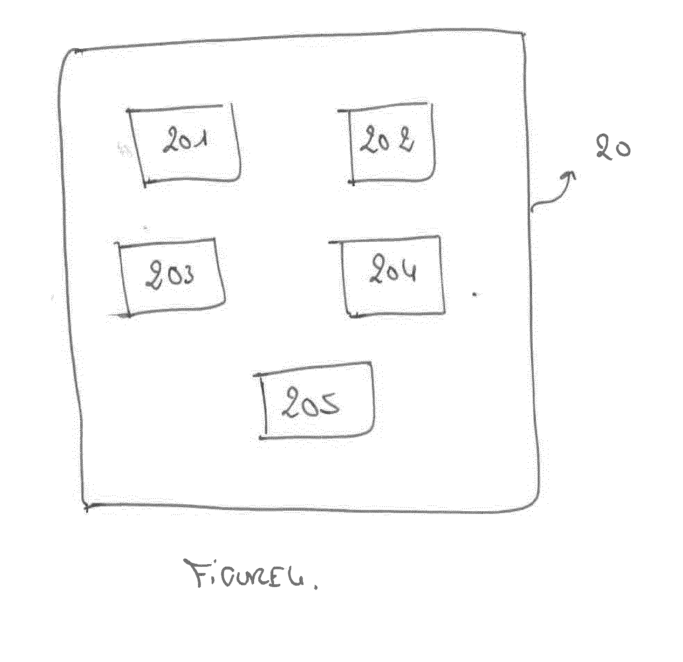

**Figure 4** represents a recommendation server 20 according to the invention. The recommendation server 20 according to the invention is capable of recommending at least one item from a vending machine 10 to a user.

The recommendation server 20 comprises receiver 201 for receiving an identifier of the vending machine 10 and an identifier of a user of the vending machine 10.

The recommending server 20 comprises a receiver 202 for receiving, in answer to a first request R1 comprising the identifier of the user, a first message MSG1 from the user profile sever 21.

The recommendation server 20 comprises a receiver 203 for receiving, in answer to a second request R2 comprising the identifier of the vending machine 10, a second message MSG2 from the management server 22.

The recommendation server 20 comprises a module 204 for determining, based on the first and second parameters, a set of at least one item currently available in the vending machine 10 to be recommended to the user.

The recommendation server 20 comprises a transmitter 205 for transmitting a third message MSG3 to the vending machine 10 comprising an identifier of the items of the set of items currently available in the vending machine 10 to be recommended to the user.

## Claims

1. A method for recommending at least one item from a vending machine to a user, the vending machine being connected to at least a recommendation server through a communication network, the method comprising the following steps of :
- Receiving a first message comprising an identifier of the vending machine and an identifier of a user of the vending machine,
- Receiving, in answer to a first request comprising the identifier of the user, a second message from a first sever storing parameters related to users of the vending machine, said second message comprising at least one parameter related to an electronic device of the user,
- Receiving, in answer to a second request comprising the identifier of the vending machine, a third message from a second server storing parameters related to vending machines, the third message comprising at least one parameter related to the items currently available in the vending machine,
- Based on the first and second parameters, determining a set of at least one item currently available in the vending machine to be recommended to the user,
- Transmitting a fourth message to the vending machine comprising an identifier of the items of the set of items currently available in the vending machine to be recommended to the user.

2. The method for recommending at least one item from a vending machine to a user according to claim 1, the method further comprising the steps of :
- Detecting a selecting command input triggering the selection of at least one item currently available in the vending machine,
- Delivering the selected item to the user,
- Transmitting a fifth message to the second server comprising an identifier of the delivered item.

3. The method for recommending at least one item from a vending machine to a user according to claim 2, wherein the second server transmits a sixth message to the user equipment of the user, the sixth message comprising at least one parameter related to a retrieving of the delivered item.

4. A recommendation server capable of recommending at least one item from a vending machine to a user, the vending machine being connected to the recommendation server through a communication network, the recommendation server comprising :
- A receiver for receiving a first message comprising an identifier of the vending machine and an identifier of a user of the vending machine,
- A receiver for receiving, in answer to a first request comprising the identifier of the user, a second message from a first sever storing parameters related to users of the vending machine, said second message comprising at least one parameter related to an electronic device of the user,
- A receiver for receiving, in answer to a second request comprising the identifier of the vending machine, a third message from a second server storing parameters related to vending machines, the third message comprising at least one parameter related to the items currently available in the vending machine,
- Based on the first and second parameters, a module for determining a set of at least one item currently available in the vending machine to be recommended to the user,
- A transmitter for transmitting a fourth message to the vending machine comprising an identifier of the items of the set of items currently available in the vending machine to be recommended to the user.

5. A system comprising a vending machine connected to a recommendation server through a communication network, a first sever storing parameters related to users of the vending machine, a second server storing parameters related to vending machines and a user equipment of the user, the recommendation server :
- Receiving a first message comprising an identifier of the vending machine and an identifier of a user of the vending machine,
- Receiving, in answer to a first request comprising the identifier of the user, a second message from a first sever storing parameters related to users of the vending machine, said second message comprising at least one parameter related to an electronic device of the user,
- Receiving, in answer to a second request comprising the identifier of the vending machine, a third message from a second server storing parameters related to vending machines, the third message comprising at least one parameter related to the items currently available in the vending machine,
- Based on the first and second parameters, determining a set of at least one item currently available in the vending machine to be recommended to the user,
- Transmitting a fourth message to the vending machine comprising an identifier of the items of the set of items currently available in the vending machine to be recommended to the user,
- Detecting a selecting command input triggering the selection of at least one item currently available in the vending machine,
- Delivering the selected item to the user,
- Transmitting a fifth message to the second server comprising an identifier of the delivered item.

6. A computer program **characterized in that** it comprises program code instructions for the implementation of the steps of the method for recommending at least one item from a vending machine to a user according to claim 1 when the program is executed by a processor.
